# EUROPEAN PATENT SPECIFICATION

(11) **EP 4 119 359 B1**
(45) Date of publication and mention of the grant of the patent: **23.10.2024**
(21) Application number: 21766932.4
(22) Date of filing: 04.03.2021
(51) Int. Cl.: B60C 5/00, B60C 11/03, B60C 11/12, B60C 11/13, B60C 11/11

(54) **TIRE**
REIFEN
PNEUMATIQUE

(30) Priority: 09.03.2020 JP 2020040318
(43) Date of publication of application: 18.01.2023
(73) Proprietor: BRIDGESTONE CORPORATION, Chuo-ku Tokyo 104-8340 (JP)
(72) Inventor: KAJIYAMA Yuji, Tokyo, 104-8340 (JP); HOSODA Kazuma, Tokyo, 104-8340 (JP); SATO Nanako, Tokyo, 104-8340 (JP); ASANUMA Koji, Tokyo, 104-8340 (JP)
(74) Representative: Marks & Clerk LLP
(86) International application number: PCT/JP2021/008472
(87) International publication number: WO 2021/182301

(56) References cited:
- EP-A1- 3 251 877
- WO-A1-2016/121858
- WO-A1-2017/082411
- DE-T5- 112016 000 553
- DE-T5- 112017 000 739
- JP-A- 2010 208 507
- JP-A- 2011 105 104
- JP-A- 2012 218 596
- JP-A- 2017 197 111
- JP-A- 2017 210 170
- JP-A- 2018 154 147
- US-A1- 2018 162 170

## Description

### [Technical Field]

The present invention relates to a tire for traveling on an ice and snow roads.

### [Background Art]

Conventionally, in a studless tire (hereinafter, the term is appropriately omitted as "tire") having performance on an ice and snow roads as well as a dry road, it is extremely important how the performance on the ice and snow roads and the performance on the dry road are balanced.

The studless tire is required to have high performance on an ice and snow roads, and at the same time, it has been sought to enhance performance on a dry road.

Therefore, an attempt has been made to define the relationship between the density of the sipes formed on the tread and the pitch length, which is a repeating unit of the shape of the tread, in order to make the driving force (snow traction) on an ice and snow roads and the driving force (dry traction) on a dry road at a high level (for example, Patent Literature 1).

### [Citation List]

### [Patent Literature]

[Patent Literature 1]
Japanese Unexamined Patent Application Publication No. 2014 -531365

### [Patent Literature 2]

German Publication DE112017000739T5 discloses a pneumatic tire including at least four main circumferential groves extending in a tire circumferential direction, and at least five land sections defined by the main circumferential grooves.

### [Patent Literature 3]

European Patent Application EP3251877A1 discloses a pneumatic tire having a tread part partitioned by four main grooves into a center land part, an outer intermediate land part, an inner intermediate land part, an outer shoulder land part, and an inner shoulder land part.

### [Patent Literature 4]

US Patent Publication US2018162170 discloses a pneumatic tire having a land portion formed in a tread surface of a tread portion on an outermost side in a tire lateral direction by a circumferential grove extending in a tire circumferential direction and a ground contact edge present in the land portion.

### [Summary of Invention]

In order to improve the snow traction, especially the on-ice performance including the driving force on an ice road surface, it is important to improve the contact property with the ice road surface, the water removing performance to remove the water screen placed between the tread and the road surface, and the draining performance to drain the water entered between the tread and the road surface to the outside of the contact surface in a balanced manner.

However, it is considered that there is room for improvement in the conventional studless tire described above in terms of improving the grounding property, water removing performance and draining performance in a well-balanced manner.

Accordingly, the following disclosure has been made in view of such a situation, and it is an object of the present invention to provide a tire having improved grounding property, water removing performance and draining performance, and further improved on-ice performance.

One aspect of the present invention is a tire including a tread (tread 20), wherein an outside first circumferential main groove (circumferential main groove 31) located closest to an outside shoulder (outside shoulder SHout), an inside first circumferential main groove (circumferential main groove 41) located closest to an inside shoulder (inside shoulder SHin), an outside second circumferential main groove (circumferential main groove 32) adjacent to the outside first circumferential main groove and located closer to the outside shoulder than an tire equatorial line, and an inside second circumferential main groove (circumferential main groove 42) adjacent to the inside first circumferential main groove and located closer to the inside shoulder than the tire equatorial line are formed on the tread. A plurality of outside shoulder land portions (outside shoulder land portions 110) are provided on a side of the outside shoulder than the outside first circumferential main groove, a plurality of outside second land portions (outside second land portions 120) are provided between the outside first circumferential main groove and the outside second circumferential main groove, a plurality of inside shoulder land portions (inside shoulder land portions 210) are provided on a side of the inside shoulder than the inside first circumferential main groove, a plurality of inside second land portions (inside second land portions 220) are provided between the inside first circumferential main groove and the inside second circumferential main groove, and a center land portion (center land portion 300) across the tire equatorial line is provided between the outside second circumferential main groove and the inside second circumferential main groove. The outside first circumferential main groove, the inside first circumferential main groove, the outside second circumferential main groove, and the inside second circumferential main groove include a see-through portion (see-through portion P) which has line of sight and each groove has an equivalent groove width, an outside shoulder lug groove (outside shoulder lug groove 31) formed between the outside shoulder land portions and an outside shoulder sipe (outside shoulder sipe 41) formed on the outside shoulder land portion are inclined to a first predetermined direction with respect to a tire width direction, and an outside second lug groove (outside second lug groove 126) formed between the outside second land portions and an outside second sipe (outside second sipe 127) formed on the outside second land portion are inclined to a second predetermined direction opposite to the first predetermined direction with respect to the tire width direction, a center lug groove (center lug groove 316) formed between the center land portions is inclined to the second predetermined direction, a center sipe (center sipe 317) formed on the center land portion is inclined in the first predetermined direction, an inside second lug groove (inside second lug groove 226) formed between the inside second land portions is inclined in the first predetermined direction, an inside second sipe (inside second sipe 227) formed on the inside second land portion is inclined to the second predetermined direction, and an inside shoulder lug groove (inside shoulder lug groove 216) formed between the inside shoulder land portion and an inside shoulder sipe (inside shoulder sipe 217) formed on the inside shoulder land portion are inclined to the first predetermined direction. The inside second lug groove and the inside shoulder lug groove are formed by offsetting in a tire circumferential direction.

### [Brief Description of Drawings]

FIG. 1 is a partial plan view of a tread of a pneumatic tire 10.
FIG. 2 is a plan view of OUT side tread 20.
FIG. 3 is a plan view of IN side tread 20.
FIG. 4 is a plan view of the tread 20 in a center region including a tire equatorial line CL.

### [Description of Embodiments]

Embodiments will be described below with reference to the drawings. It should be noted that the same functions and configurations are denoted by the same or similar reference numerals, and the description thereof is appropriately omitted.

### (1) Overall schematic configuration of tire

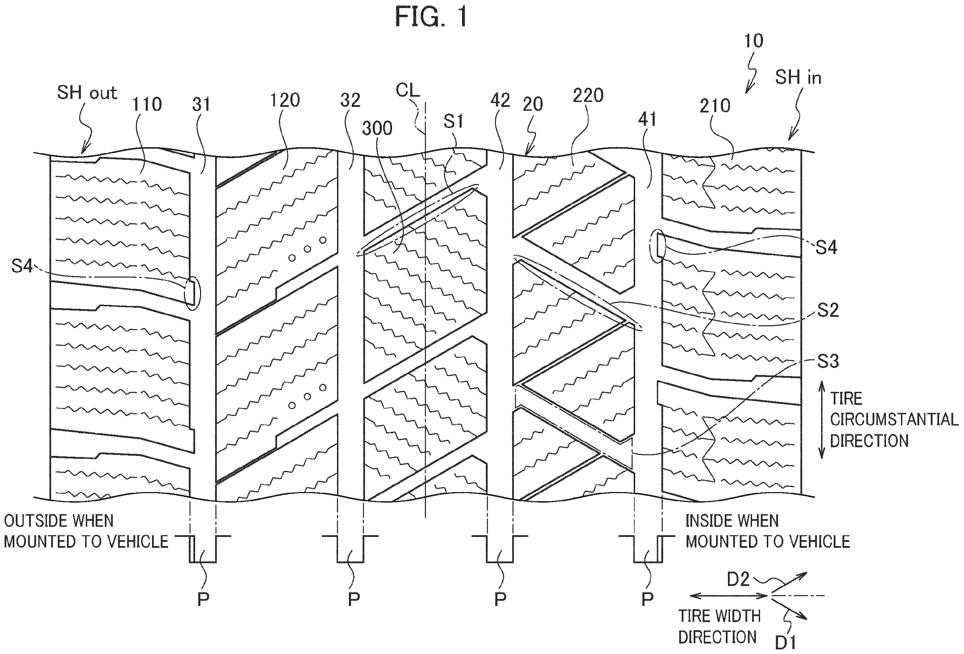

FIG. 1 is a partial plan view of a tread of the pneumatic tire 10 according to the present embodiment. As shown in FIG. 1, the pneumatic tire 10 is a tire suitable for traveling on an ice and snow roads and is called a studless tire or the like.

The studless tire may be referred to as a snow tire or a winter tire. Alternatively, the pneumatic tire 10 may be a so-called all-season tire usable not only in winter but also in all seasons.

Although the type of vehicle to which the pneumatic tire 10 is mounted is not particularly limited, it can be suitably used in general standard passenger car (which may include minivans and light passenger cars).

As shown in FIG. 1, it is preferable that outside (OUT side) and inside (IN side) are designated when the pneumatic tire 10 is mounted on a vehicle. The OUT side is located on outside visible from the side of the vehicle when the tire is mounted, and the IN side is located on inside not visible from the side of the vehicle when the tire is mounted. In the following description, the OUT side and IN side are referred to simply as an outside and an inside when appropriate.

The tread 20 is portion in contact with the road surface. The tread 20 is provided with a plurality of land portions (which may be referred to as blocks or land blocks).

A plurality of circumferential main grooves extending in the tire circumferential direction are formed on the tread 20. Specifically, four circumferential main grooves are formed.

The circumferential main groove 31 is located closest to an outside shoulder SHout. In this embodiment, the circumferential main groove 31 constitutes an outside first circumferential main groove.

The circumferential main groove 41 is located closest to an inside shoulder SHin. In this embodiment, the circumferential main groove 41 constitutes an inside first circumferential main groove.

The circumferential main groove 32 is adjacent to the circumferential main groove 31 in the tire width direction and located closer to the outside shoulder SHout than the tire equatorial line CL. In this embodiment, the circumferential main groove 32 constitutes an outside second circumferential main groove.

The circumferential main groove 42 is adjacent to the circumferential main groove 41 in the tire width direction and located closer to the inside shoulder SHin than the tire equatorial line CL. In this embodiment, the circumferential main groove 42 constitutes an inside second circumferential main groove.

The circumferential main groove 31, the circumferential main groove 32, the circumferential main groove 41, and the circumferential main groove 42 are linear in a tread surface view. In the present embodiment, the circumferential main groove 31, the circumferential main groove 32, the circumferential main groove 41 and the circumferential main groove 42 are parallel to the tire circumferential direction.

The circumferential main groove 31, the circumferential main groove 32, the circumferential main groove 41 and the circumferential main groove 42 include a see-through portion P which can be viewed (has line of sight). The see-through portion P may be interpreted as a portion that can be viewed to the front without being obstructed by a side wall or the like of the land portion when the circumferential main groove is developed on a plane. The see-through portion P may be formed within the ground contacted surface of the pneumatic tire 10. Since the see-through portion P is formed in the ground contacted surface, drainability can be improved.

Preferably, the circumferential main groove 31, the circumferential main groove 32, the circumferential main groove 41 and the circumferential main groove 42 have the same (equivalent) groove width. The groove width means the width of the circumferential main groove along a direction (tire width direction) orthogonal to the extending direction (tire circumferential direction) of the circumferential main groove. The equivalent groove widths may be in a range of groove widths that do not differ substantially (a difference of approximately not more than a few millimeters, depending on the tire size). Alternatively, the allowable deviation of the groove widths of the four circumferential main grooves may be within ± 20% of the reference value (average or the like) of the groove widths.

An outside shoulder land portion 110 is provided on the outside shoulder SHout side of the circumferential main groove 31. The outside shoulder land portion 110 is the land portion provided most in outside. The land portion means a portion provided on the tread 20 and in contact with the road surface. However, a part of the land portion close to the shoulder may not necessarily come into contact with the road surface at the time of normal load. The normal load is the maximum load capacity (maximum load) corresponding to the maximum load capacity in the JATMA (Japan Automobile Tire Manufacturers Association) YearBook. Further, ETRTO in Europe, TRA in the U.S., and other tire standards in other countries may also be referred.

The outside shoulder land portion 110 is block shaped and a plurality of the outside shoulder land portions 110 are provided along the tire circumferential direction. The size of outside shoulder land portion 110 along the tire circumferential direction, the sipe interval and the number of sipes formed in outside shoulder land portion 110 may be changed according to the variation of the pitch applied to the pneumatic tire 10 (the same applies to other land portions).

An outside second land portion 120 is provided between the circumferential main groove 31 and the circumferential main groove 32. The outside second land portion 120 is adjacent to the outside shoulder land portion 110 in the tire width direction. A plurality of the outside second land portions 120 are also provided along the tire circumferential direction. However, the outside second land portion 120 is not clearly divided by a lug groove as the outside shoulder land portion 110, and at the time of grounding, a plurality of adjacent outside second land portions 120 in the tire circumferential direction are connected and can function as a rib-like land portion.

An inside shoulder land portion 210 is provided on the inside shoulder SHin side of the circumferential main groove 41. The inside shoulder land portion 210 is the land portion provided most in inside. The inside shoulder land portions 210 are block shaped and a plurality of the inside shoulder land portions 210 are provided along the tire circumferential direction.

An inside second land portion 220 is provided between the circumferential main groove 41 and the circumferential main groove 42. The inside second land portion 220 is adjacent to the inside shoulder land portion 210 in the tire width direction. A plurality of the inside second land portions 220 are also provided along the tire circumferential direction.

A center land portion 300 is provided between the circumferential main groove 32 and the circumferential main groove 42. The center land portion 300 is provided so as to across the tire equatorial line CL.

The outside of the center land portion 300 is provided with the outside second land portion 120 via the circumferential main groove 32. On the other hand, the inside second land portion 220 is provided in inside of the center land portion 300 via the circumferential main groove 42. A plurality of center land portions 300 are provided along the tire circumferential direction.

### (2) Shape of land portion on OUT side

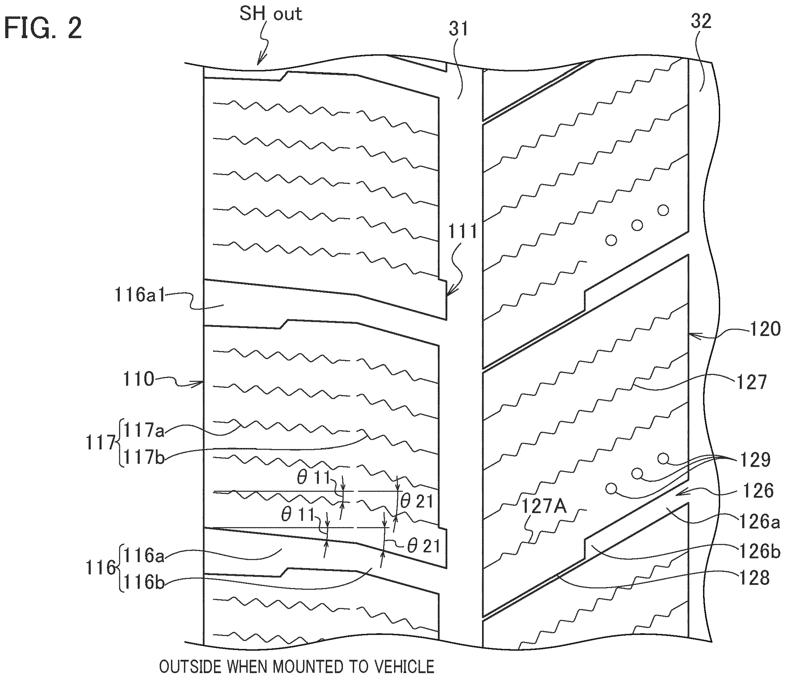

FIG. 2 is a plan view of OUT side tread 20. As shown in FIG. 2, an outside shoulder lug grooves 116 are formed between the outside shoulder land portions 110 adjacent in the tire circumferential direction.

The outside shoulder lug groove 116 extends along the tire width direction. The expression "extending along the tire width direction" may mean that the angle formed by the outside shoulder lug groove 116 with the tire width direction is 45 degrees or less. The angle may mean an angle on the acute angle side formed by the extending direction of the outside shoulder lug groove 116 and the tire width direction in the tread surface view (the same applies to other directions).

The outside shoulder lug groove 116 includes a shoulder side portion 116 a and a main groove side portion 116 b. The shoulder side portion 116 a is a portion on the outside shoulder SHout side. The main groove side portion 116 a is a portion located on the circumferential main groove 31 side.

In the present embodiment, the shoulder side portion 116 a has a wide portion 116 a1 having a wide groove width. Specifically, the wide portion 116 a1 is formed on the outside shoulder SHout side. The wide portion 116 a1 is thus formed, and a step is formed in the outside shoulder lug groove 116.

A plurality of outside shoulder sipes 117 are formed on the outside shoulder land portion 110. The outside shoulder sipe 117 extends along the tire width direction. The outside shoulder sipe 117 has a zigzag shape in which the amplitude in the tire circumferential direction is repeated. The outside shoulder sipe 117 may be a so-called three-dimensional sipe which repeats the amplitude in the tire circumferential direction in the depth direction, or a so-called two-dimensional sipe which becomes linear without having the amplitude in the tire circumferential direction in the depth direction (tire radial direction).

The outside shoulder sipe 117 includes a shoulder side portion 117 a and a main groove side portion 117 b. The shoulder side portion 117 a is a portion on the outside shoulder SHout side. The main groove side portion 117 a is a portion located on the circumferential main groove 31 side.

As shown in FIG. 2, the outside shoulder sipe 117 may be divided in the tire width direction. Specifically, of the divided outside shoulder sipes 117, the outside shoulder SHout side may be distinguished from the shoulder side portion 117 a, and the circumferential main groove 31 side may be distinguished from the main groove side portion 117 b.

The side wall of the outside shoulder land portion 110 on the side of the circumferential main groove 31 is provided with a projection 111 that projects toward the tire equatorial line CL (see FIG. 1) side. The projection portion 111 is provided at the tire circumferential end of the outside shoulder land portion 110 and protrudes toward the circumferential main groove 31 in a tread surface view. The outside shoulder sipe 117 is formed at the corner portion (end portion in the tire circumferential direction) of the projection 111 so that the end portions of the outside shoulder sipe 117 (main groove side portion 117 b) do not overlap.

An outside second lug groove 126 is formed between the outside second land portions 120 adjacent in the tire circumferential direction. The outside second lug groove 126 extends along the tire width direction.

An one end 126 a of the outside second lug groove 126 in the tire width direction is opened to the circumferential main groove 32 on the tire equator side. That is, the outside second lug groove 126 communicates with the circumferential main groove 32.

Another end 126 b of the outside second lug groove 126 communicates with the lug groove communicating sipe 128. The lug groove communicating sipe 128 is also formed in the outside second land portion 120 and extends along the tire width direction. The angle formed by the outside second lug groove 126 in the tire width direction is preferably 0 to 45 degrees.

A plurality of outside second sipes 127 are formed in the outside second land portion 120. The outside second sipe 127 extends along the tire width direction. The outside second sipe 127 has a zigzag shape in which the amplitude in the tire circumferential direction is repeated. The outside second sipe 127 opens to the circumferential main groove 31 and the circumferential main groove 32. That is, the outside second sipe 127 communicates with the circumferential main groove 31 and the circumferential main groove 32.

The angle formed by the outside second sipe 127 and the lug groove communicating sipe 128 in the tire width direction is also preferably 0 to 45 degrees.

The outside second sipe 127 may be a three-dimensional sipe or a two-dimensional sipe, similarly to the outside shoulder sipe 117.

The outside second sipe 127 A formed closest to the outside second lug groove 126 communicating with the lug groove communicating sipe 128 in the tire circumferential direction opens only to the circumferential main groove 31. That is, one end of the outside second sipe 127 A opens to the circumferential main groove 31, while the other end of the outside second sipe 127 A terminates in the outside second land portion 120.

A plurality of pinhole sipes 129 are formed on the extension line of the outside second sipe 127 A. The pinhole sipe 129 is a cylindrical sipe with a small diameter along the tire radial direction, and the block rigidity of the outside second land portion 120 is not significantly lowered than that of the outside second sipe 127 A.

The outside shoulder lug groove 116 and the outside shoulder sipe 117 are inclined in the direction D1 (first predetermined direction, see FIG. 1) with respect to the tire width direction. That is, the outside shoulder lug groove 116 and the outside shoulder sipe 117 are not parallel to the tire width direction but have a constant angle with respect to the tire width direction. As shown in FIG. 2, when the OUT side is located on the left side and the IN side is located on the right side, the outside shoulder lug groove 116 and the outside shoulder sipe 117 may be expressed as a right shoulder downward.

On the other hand, the outside second lug groove 126 (including the lug groove communicating sipe 128) and the outside second sipe 127 (including outside second sipe 127 A) are inclined in a direction D2 (second predetermined direction, see FIG. 1) which is opposite to the first predetermined direction with respect to the tire width direction.

That is, the outside second lug groove 126 and the outside second sipe 127 are not parallel to the tire width direction but have a constant angle with respect to the tire width direction. As shown in FIG. 2, when the OUT side is located on the left side and the IN side is located on the right side, the outside second lug groove 126 and the outside second sipe 127 may be expressed as right shoulder upward.

As shown in FIG. 2, in the present embodiment, the inclination angle θ21 of the main groove side portion 116 b and the main groove side portion 117 b in the tire width direction is larger than the inclination angle θ11 of the shoulder side portion 116 a and the shoulder side portion 117 a in the tire width direction. While satisfying such a relationship, the inclination angle θ 11 is preferably 0 to 25 degrees, and the inclination angle θ21 is preferably 0 to 35 degrees.

The difference between the inclination angle θ11 and the inclination angle θ21 need not be so large. For example, the difference between the inclination angle θ11 and the inclination angle θ21 may be 10 degrees or less. The inclination angle θ21 of the main groove side portion 116 b and the main groove side portion 117 b may be equal to the inclination angle of the outside second lug groove 126 and the outside second sipe 127.

### (3) Shape of land portion on the IN side

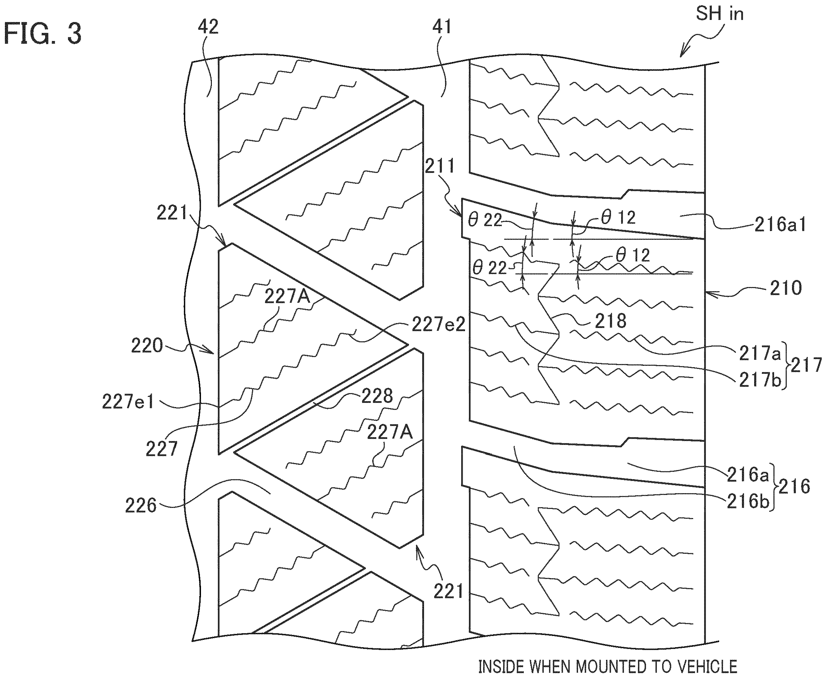

FIG. 3 is a plan view of IN side tread 20. As shown in FIG. 3, an inside shoulder lug grooves 216 are formed between the inside shoulder land portions 210 adjacent in the tire circumferential direction. The inside shoulder lug groove 216 extends along the tire width direction. The inside shoulder lug groove 216 includes a shoulder side portion 216 a and a main groove side portion 216 b. The shoulder side portion 216 a is a portion on the inside shoulder SHin side. The main groove side portion 216 a is a portion located on the circumferential main groove 41 side.

In the present embodiment, the shoulder side portion 216 a has a wide portion 216 a1 having a wide groove width. Specifically, the wide portion 216 a1 is formed on the inside shoulder SHin side.

A plurality of inside shoulder sipes 217 are formed in the inside shoulder land portion 210. The inside shoulder sipe 217 extends along the tire width direction. The inside shoulder sipe 217 has a zigzag shape in which the amplitude in the tire circumferential direction is repeated. The inside shoulder sipe 217 may be a three-dimensional sipe or a two-dimensional sipe, similarly to the outside shoulder sipe 117 or the like.
the inside shoulder sipe 217 includes a shoulder side portion 217 a and a main groove side portion 217 b. The shoulder side portion 217 a is a portion on the inside shoulder SHin side. The main groove side portion 217 a is a portion located on the circumferential main groove 41 side.

In this embodiment, a circumferential sipe 218 is formed in the inside shoulder land portion 210 so as to divide the inside shoulder sipe 217. The circumferential sipe 218 extends along the tire circumferential direction. The circumferential sipe 218 has a zigzag shape which repeats the amplitude in the tire width direction.

The circumferential sipe 218 may be a three-dimensional sipe or a two-dimensional sipe.

Of the plurality of inside shoulder sipes 217, some of the inside shoulder sipes 217 may communicate with the circumferential sipe 218. Specifically, the shoulder side portion 217 a may communicate with the circumferential sipe 218, and the main groove side portion 217 b may communicate with the circumferential sipe 218.

However, in consideration of the rigidity balance of the inside shoulder land portion 210, as shown in FIG. 3, it is preferable that only one of the shoulder side portion 217 a and the main groove side portion 217 b of each of the inside shoulder sipes 217 communicates with the circumferential sipe 218.

The side wall of the inside shoulder land portion 210 on the side of the circumferential main groove 41 is provided with a projection 211 that projects toward the tire equatorial line CL (see FIG. 1) side. The projection 211 is provided at the tire circumferential end of the inside shoulder land portion 210 and protrudes toward the circumferential main groove 41 in a tread surface view.

The inside shoulder lug groove 216 and the inside shoulder sipe 217 are inclined in the direction D1 (see FIG. 1) with respect to the tire width direction.

That is, the inside shoulder lug groove 216 and the inside shoulder sipe 217 are not parallel to the tire width direction but have a constant angle with respect to the tire width direction. As shown in FIG. 3, when the OUT side is located on the left side and the IN side is located on the right side, the inside shoulder lug groove 216 and the inside shoulder sipe 217 may be expressed as a right shoulder downward.

The inclination angle θ22 of the main groove side portion 216 b and the main groove side portion 217 b in the tire width direction is larger than the inclination angle θ12 of the shoulder side portion 216 a and the shoulder side portion 217 a in the tire width direction. While satisfying such a relationship, the inclination angle θ12 is preferably 0 to 25 degrees, and the inclination angle θ22 is preferably 0 to 35 degrees.

An inside second lug groove 226 is formed between the inside second land portions 220 adjacent in the tire circumferential direction. The inside second lug groove 226 extends along the tire width direction and communicates with the circumferential main groove 41 and the circumferential main groove 42.

A plurality of inside second sipes 227 are formed in the inside second land portion 220. The inside second sipe 227 extends along the tire width direction. The inside second sipe 227 has a zigzag shape in which the amplitude in the tire circumferential direction is repeated. The inside second sipe 227 may be a three-dimensional sipe or a two-dimensional sipe, similarly to the outside second sipe 127 and the like.

An one end 227 e1 of the inside second sipe 227 is opened to the circumferential main groove 42. On the other hand, another end 227 e2 of the inside second sipe 227 terminates in the inside second land portion 220.

An one end of the inside second sipe 227 may be opened to one of the circumferential main groove 41, the circumferential main groove 42, or the inside second lug groove 226. Further, both ends may be opened to either of the circumferential main groove 41, the circumferential main groove 42 or the inside second lug groove 226 as in the inside second sipe 227 A.

An inclined narrow groove 228 is formed in the inside second land portion 220 to divide the inside second land portion 220 into two portions. Like the inside second sipe 227, the inclined narrow groove 228 is inclined in the tire width direction. The inclined narrow groove 228 has a groove width wider than that of the sipe, but has a groove width narrower than that of the lug groove.

The inclination angles of the inside second sipe 227 and the inclined narrow groove 228 are substantially the same. That is, the inclined narrow groove 228 is formed in parallel with the inside second sipe 227.

A notch portion 221 is formed at an end in the tire circumferential direction of the inside second land portion 220. The notch portions 221 may be formed at both ends of the inside second land portion 220 in the tire circumferential direction. The notch portion 221 has a shape in which an apex in the tire circumferential direction of the parallelogram inside second land portion 220 is notched in a tread surface view. Thus, an acute angle portion is eliminated as the whole inside second land portion 220.

Further, the notch portion 221 is formed to widen the groove width of the end portion of inside second lug groove 226. That is, the inside second lug groove 226 has a shape in which the groove width gradually increases toward the end portion in the tire width direction.

The inside second lug groove 226 is inclined in the direction D1 (see FIG. 1) with respect to the tire width direction. The inside second sipe 227 is inclined in the direction D2 with respect to the tire width direction. That is, the inside second lug groove 226 and the inside second sipe 227 are not parallel to the tire width direction but have a constant angle with respect to the tire width direction.

In the present embodiment, the inside second lug groove 226 and the inside shoulder lug groove 216 are formed by offsetting in the tire circumferential direction. That is, the position in the tire circumferential direction where the inside second lug groove 226 is formed and the position in the tire circumferential direction where the inside shoulder lug groove 216 is formed are different and the phase is inconsistent.

### (4) Shape of land portion in center region

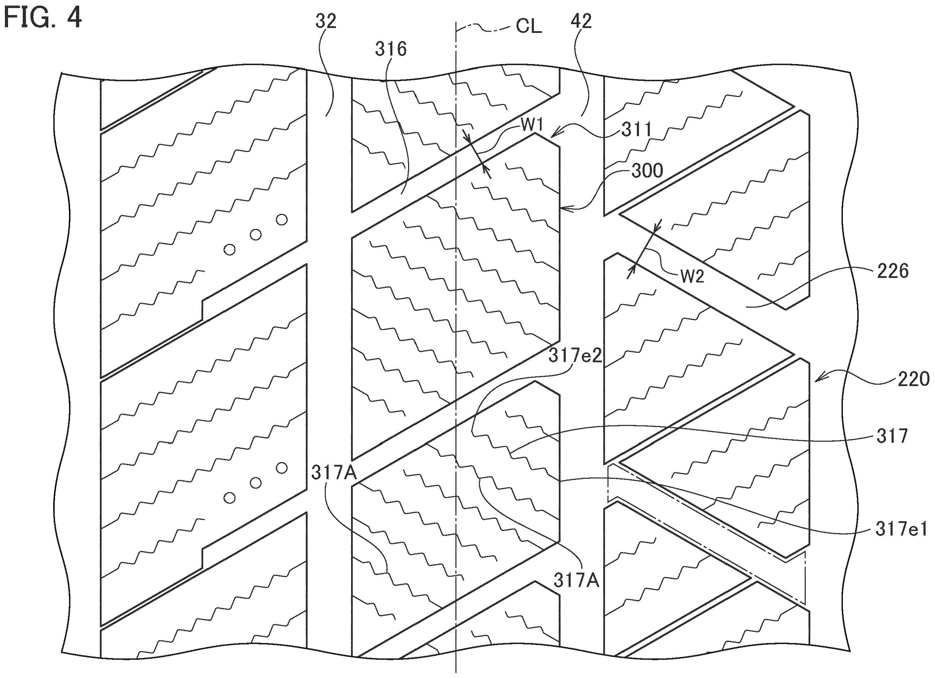

FIG. 4 is a plan view of the tread 20 in a center region including the tire equatorial line CL. As shown in FIG. 4, center lug grooves 316 are formed between adjacent center land portions 300 in the tire circumferential direction. The center lug groove 316 extends along the tire width direction.

A plurality of center sipes 317 are formed in the center land portion 300. The center sipe 317 extends along the tire width direction. The center sipe 317 has a zigzag shape which repeats the amplitude in the tire circumferential direction. The center sipe 317 may be a three-dimensional sipe or a two-dimensional sipe, similarly to the outside shoulder sipe 117 or the like.

An one end 317 e1 of the center sipe 317 is opened to the circumferential main groove 42. On the other hand, another end 317 e2 of the center sipe 317 terminates in the center land portion 300.

An one end of the center sipe 317 may be opened to one of the circumferential main groove 42, the circumferential main groove 32, or the center lug groove 316. Further, both ends may be opened to either of the circumferential main groove 42, the circumferential main groove 32 or the center lug groove 316 as in the center sipe 317 A.

The center lug groove 316 is inclined in the direction D2 (see FIG. 1) with respect to the tire width direction. The center sipe 317 is inclined in the direction D1 with respect to the tire width direction. That is, the center lug groove 316 and the center sipe 317 are not parallel to the tire width direction, have a constant angle with respect to the tire width direction, and are inclined in the opposite direction with respect to the tire width direction as a reference.

A notch portion 311 is formed at one end of the center land portion 300 on the side of the circumferential main groove 42 in the tire circumferential direction. The notched portion 311 has a shape in which one apex in the tire circumferential direction of the parallelogram center land portion 300 is notched in a tread surface view.

Thus, an acute angle portion is eliminated as an end portion of the center land portion 300 on the circumferential main groove 42 side, that is, on the inside second land portion 220 side.

Further, in the present embodiment, the groove width W2 of the inside second lug groove 226 is wider than the groove width W1 of the center lug groove 316. Although the ratio of the groove width W1 to the groove width W2 is not particularly limited, it is preferable that the groove width W2 be about 20% or more wider than the groove width W1 in consideration of draining performance.

### (5) Function and effects

According to the embodiment described above, the following effects are obtained. Specifically, in the pneumatic tire 10, the circumferential main groove 31, the circumferential main groove 32, the circumferential main groove 41 and the circumferential main groove 42 have the same groove widths. Therefore, since the groove widths of the four circumferential main grooves become uniform, the contact pressure distribution of the outside shoulder land portion 110, the outside second land portion 120, the inside shoulder land portion 210, and the inside second land portion 220 adjacent to the circumferential main grooves can be made uniform.

The circumferential main groove 31, the circumferential main groove 32, the circumferential main groove 41 and the circumferential main groove 42 include a see-through portion P. Therefore, sufficient drainability along the tire circumferential direction can be ensured.

In this embodiment, the outside shoulder lug groove 116 and the outside shoulder sipe 117 are inclined in the direction D1 (when the OUT side is located on the left side and the IN side is located on the right side, right shoulder downward). The outside second lug groove 126 and the outside second sipe 127 are inclined in the direction D2 (when the OUT side is located on the left side and the IN side is located on the right side, right shoulder upward). Therefore, since the lug groove and sipe are inclined toward one side of the circumferential main groove 31 in the tire circumferential direction, the draining property along the tire circumferential direction can be further enhanced.

In this embodiment, the center lug groove 316 is inclined in the direction D2 (right shoulder upward), and the center sipe 317 is inclined in the direction D1 (right shoulder downward). The inside second lug groove 226 is inclined (rightward downward) in the direction D1, and the inside second sipe 227 is inclined (rightward upward) in the direction D2. Therefore, since the lug groove and sipe are inclined toward one side of the circumferential main groove 42 in the tire circumferential direction, the draining property along the tire circumferential direction can be further enhanced.

In the present embodiment, the inside shoulder lug groove 216 and the inside shoulder sipe 217 are inclined in the direction D1 (right shoulder downward). The inside second lug groove 226 and the inside shoulder lug groove 216 are offset in the tire circumferential direction. Thus, interference of water flow due to drainage from the inside second lug groove 226 to the circumferential main groove 41 and drainage from the inside shoulder lug groove 216 to the circumferential main groove 41 can be suppressed, and drainage to the outside of the tread 20 via the inside shoulder lug groove 216 cannot be prevented.

According to the pneumatic tire 10 having such a constitution, the grounding property, the water removing performance and the draining performance can be improved, and the on-ice performance can be further improved.

As shown in the regions S1 and S2 in FIG. 1, a part of the sipes formed in the land portion terminate in the land portion without communicating with the lug groove or the like. Thus, the edge component by the end portion in the tire circumferential direction of the land portion is increased, and the water removing performance of the water screen placed between the tread 20 and the road surface can be effectively enhanced.

Further, by ensuring the groove width of the lug groove (inside second lug groove 226) of the inside second land portion 220 as in the region S3, the amount of digging up snow increases and the on-snow performance can be improved.

Further, as shown in region S4, by providing the projection portions in the circumferential main groove 31 and the circumferential main groove 41, it is reduced that the water flow in the circumferential main groove enters the sipe formed in the land portion, so that drainability through the sipe from the land portion can be secured.

In the present embodiment, as described above, the one end 126 a of the outside second lug groove 126 is opened in the circumferential main groove 32, and another end 126 b of the outside second lug groove 126 communicates with the lug groove communicating sipe 128. Therefore, when the outside second land portion 120 contacts the ground, the lug groove communicating sipe 128 is closed, and the adjacent outside second land portion 120 can form a rib-like land portion in the tire circumferential direction, so that the grounding property can be improved. This will also ensure a sufficient steering stability.

Further, the outside second sipe 127 A formed closest to the outside second lug groove 126 communicating with the lug groove communicating sipe 128 in the tire circumferential direction opens only to the circumferential main groove 31. Therefore, the other end of the outside second sipe 127 A terminates in the outside second land portion 120, and in particular, a decrease in the block rigidity of the outside second land portion 120 near the outside second lug groove 126 can be avoided.

In this embodiment, the one end 317 e1 of the center sipe 317 opens to the circumferential main groove 42, and another end 317 e2 of the center sipe 317 terminates in the center land portion 300 (see region S1). The one end 227 e1 of the inside second sipe 227 opens to the circumferential main groove 42, and another end 227 e2 of the inside second sipe 227 terminates in the inside second land portion 220 (see region S2).

Therefore, as described above, the water removing performance of the water screen placed between the tread 20 and the road surface can be effectively enhanced.

In this embodiment, the inclination angle θ21 of the main groove side portion 116 b and the main groove side portion 117 b in the tire width direction is larger than the inclination angle θ11 of the shoulder side portion 116 a and the shoulder side portion 117 a in the tire width direction. The inclination angle θ22 of the main groove side portion 216 b and the main groove side portion 217 b in the tire width direction is larger than the inclination angle θ12 of the shoulder side portion 216 a and the shoulder side portion 217 a in the tire width direction.

Therefore, smooth drainage from the shoulder land portion to the circumferential main groove can be accelerated, and the draining performance can be further improved.

In the present embodiment, the groove width W2 of the inside second lug groove 226 is wider than the groove width W1 of the center lug groove 316. Therefore, it contributes to improvement of drainage from the center land portion 300 via the inside second lug groove 226, and as described above, the amount of snow dug up by the inside second lug groove 226 is increased (see region S3), and snow performance can also be improved.

### (6) Other embodiments

Although the embodiment has been described above, it is obvious to those skilled in the art that various modifications and improvements are possible without being limited to the description of the embodiment.

For example, in the above-described embodiment, the sipes formed in the respective land portions are zigzag in the tread surface view, but are not necessarily limited to zigzag. The sipe may be wavy or linear, for example.

Although the description has been made on the assumption that the OUT side and the IN side are used when the tire is mounted to the vehicle in the above-described embodiment, the description is not necessarily limited to the case where the tire is mounted to the vehicle, and it is possible to simply interpret one shoulder of the tread 20 as outside (OUT side) and the other shoulder of the tread 20 as inside (IN side).

Although the invention has been described in detail above, it will be apparent to those skilled in the art that the invention is not limited to the embodiments described herein. This invention is defined by the statement of the claims.

### [Explanation of Reference Numerals]

10 Pneumatic tire
20 Tread
31, 32, 41, 42 Circumferential main grooves
110 Outside shoulder land portion
111 Projection
116 Outside shoulder lug groove
116 a Shoulder side portion
116 a1 Wide portion
116 b Main groove side portion
117 Outside shoulder sipe
117 a Shoulder side portion
117 b Main groove side portion
120 Second land portion
126 Outside second lug groove
126 a One end
126 b Another end
127, 127 A Outside second sipe
128 Lug groove communicating sipe
129 Pinhole sipe
210 Inside shoulder land portion
211 Projection
216 Inside shoulder lug groove
216 a Shoulder side portion
216 a1 Wide portion
216 b Main groove side portion
217 Inside shoulder sipe
217 a Shoulder side portion
217 b Main groove side portion
218 Circumferential sipe
220 Inside second land portion
221 Notch portion
226 Inside second lug groove
227, 227 A Inside second sipe
227 e1 One end
227 e2 Another end
228 Inclined narrow groove
300 Center land portion
311 Notch portion
316 Center lug groove
317, 317 A Center sipe
317 e1 One end
317 e2 Another end
CL Tire equatorial line
P See-through portion
SHout Outside Shoulder
SHin Inside Shoulder

## Claims

1. A tire (10) comprising a tread, wherein
an outside first circumferential main groove (31) located closest to an outside shoulder (SHout);
an inside first circumferential main groove (41) located closest to an inside shoulder (SHin);
an outside second circumferential main groove (32) adjacent to the outside first circumferential main groove and located closer to the outside shoulder than an tire equatorial line; and
an inside second circumferential main groove (42) adjacent to the inside first circumferential main groove and located closer to the inside shoulder than the tire equatorial line;
are formed on the tread, wherein
a plurality of outside shoulder land portions (110) are provided on a side of the outside shoulder than the outside first circumferential main groove;
a plurality of outside second land portions (120) are provided between the outside first circumferential main groove and the outside second circumferential main groove;
a plurality of inside shoulder land portions (210) are provided on a side of the inside shoulder than the inside first circumferential main groove;
a plurality of inside second land portions (220) are provided between the inside first circumferential main groove and the inside second circumferential main groove; and
a center land portion (300) across the tire equatorial line is provided between the outside second circumferential main groove and the inside second circumferential main groove; wherein
the outside first circumferential main groove, the inside first circumferential main groove, the outside second circumferential main groove, and the inside second circumferential main groove include a see-through portion (P) which has line of sight and each groove has an equivalent groove width,
an outside shoulder lug groove (31) formed between the outside shoulder land portions and an outside shoulder sipe (41) formed on the outside shoulder land portion are inclined to a first predetermined direction with respect to a tire width direction, and
an outside second lug groove (126) formed between the outside second land portions and an outside second sipe (127) formed on the outside second land portion are inclined to a second predetermined direction opposite to the first predetermined direction with respect to the tire width direction;
a center lug groove (316) formed between the center land portions is inclined to the second predetermined direction,
a center sipe (317) formed on the center land portion is inclined in the first predetermined direction,
an inside second lug groove (226) formed between the inside second land portions is inclined in the first predetermined direction,
an inside second sipe (227) formed on the inside second land portion is inclined to the second predetermined direction, and
an inside shoulder lug groove (216) formed between the inside shoulder land portion and an inside shoulder sipe (217) formed on the inside shoulder land portion are inclined to the first predetermined direction, wherein
the inside second lug groove and the inside shoulder lug groove are formed by offsetting in a tire circumferential direction.

2. The tire according to claim 1, wherein
one end of the outside second lug groove in the tire width direction is opened to the outside second circumferential main groove; and
another end of the outside second lug groove in the tire width direction is formed on the outside second land portion and communicates with a lug groove communicating sipe inclined to the second predetermined direction.

3. The tire according to claim 2, wherein the outside second sipe formed closest to the outside second lug groove communicating with the lug groove communicating sipe in the tire circumferential direction opens only to the outside first circumferential main groove.

4. The tire according to any one of claims 1 to 3, wherein
the center land portion includes the center sipe, of which one end is opened in either of the outside second circumferential main groove, the inside second circumferential main groove, or the center lug groove, and another end of the center sipe is terminated in the center land portion.

5. The tire according to any one of claims 1 to 4, wherein
the inside second land portion includes the inside second sipe, of which one end is opened in either of the inside first circumferential main groove, the inside second circumferential main groove, or the inside second lug groove, and another end of the inside second sipe is terminated in the inside second land portion.

6. The tire according to any one of claims 1 to 5, wherein an inclination angle of a main groove side portion located on a side of the outside first circumferential main groove of the outside shoulder lug groove and the outside shoulder sipe with respect to the tire width direction is larger than an inclination angle of a shoulder side portion located on a side of the outside shoulder of the outside shoulder lug groove and the outside shoulder sipe with respect to the tire width direction.

7. The tire according to any one of claims 1 to 6, wherein an inclination angle of a main groove side portion located on a side of the inside first circumferential main groove of the inside shoulder lug groove and the inside shoulder sipe with respect to the tire width direction is larger than an inclination angle of a shoulder side portion located on a side of the inside shoulder of the inside shoulder lug groove and the inside shoulder sipe with respect to the tire width direction.

8. The tire according to any one of claims 1 to 7, wherein a groove width of the inside second lug groove is wider than a groove width of the center lug groove.

## Patentansprüche

1. Reifen (10), der eine Lauffläche umfasst, wobei
eine äußere erste umlaufende Hauptrille (31), die sich am nächsten zu einer äußeren Schulter (SHout) befindet;
eine innere erste umlaufende Hauptrille (41), die sich am nächsten zu einer inneren Schulter (SHin) befindet;
eine äußere zweite umlaufende Hauptrille (32), angrenzend an die äußere erste umlaufende Hauptrille und näher zu der äußeren Schulter befindlich als eine Reifenäquatorlinie; und
eine innere zweite umlaufende Hauptrille (42), angrenzend an die innere erste umlaufende Hauptrille und näher zu der inneren Schulter befindlich als die Reifenäquatorlinie;
auf der Lauffläche gebildet sind, wobei
eine Vielzahl von äußeren Schulterstegabschnitten (110) auf einer Seite der äußeren Schulter als die äußere erste umlaufende Hauptrille bereitgestellt wird;
eine Vielzahl von äußeren zweiten Stegabschnitten (120) zwischen der äußeren ersten umlaufenden Hauptrille und der äußeren zweiten umlaufenden Hauptrille bereitgestellt wird;
eine Vielzahl von inneren Schulterstegabschnitten (210) auf einer Seite der inneren Schulter als die innere erste umlaufende Hauptrille bereitgestellt wird;
eine Vielzahl von inneren zweiten Stegabschnitten (220) zwischen der inneren ersten umlaufenden Hauptrille und der inneren zweiten umlaufenden Hauptrille bereitgestellt wird; und
ein mittiger Stegabschnitt (300) über die Reifenäquatoriallinie zwischen der äußeren zweiten umlaufenden Hauptrille und der inneren zweiten umlaufenden Hauptrille bereitgestellt wird; wobei
die äußere erste umlaufende Hauptrille, die innere erste umlaufende Hauptrille, die äußere zweite umlaufende Hauptrille und die innere zweite umlaufende Hauptrille einen durchsichtigen Abschnitt (P) einschließen, der eine Sichtlinie aufweist, und jede Rille eine äquivalente Rillenbreite aufweist,
eine äußere Schulterstollenrille (31), die zwischen den äußeren Schulterstegabschnitten gebildet ist, und eine äußere Schulterlamelle (41), die auf dem äußeren Schulterstegabschnitt gebildet ist, zu einer ersten vorbestimmten Richtung in Bezug auf eine Reifenbreitenrichtung geneigt sind, und
eine äußere zweite Stollenrille (126), die zwischen den äußeren zweiten Stegabschnitten gebildet ist, und eine äußere zweite Lamelle (127), die auf dem äußeren zweiten Stegabschnitt gebildet ist, zu einer zweiten vorbestimmten Richtung, entgegengesetzt zu der ersten vorbestimmten Richtung, in Bezug auf die Reifenbreitenrichtung geneigt sind;
eine mittige Stollenrille (316), die zwischen den mittigen Stegabschnitten gebildet ist, zu der zweiten vorbestimmten Richtung geneigt ist,
eine mittige Lamelle (317), die auf dem mittigen Stegabschnitt gebildet ist, in der ersten vorbestimmten Richtung geneigt ist,
eine innere zweite Stollenrille (226), die zwischen den inneren zweiten Stegabschnitten gebildet ist, in der ersten vorbestimmten Richtung geneigt ist,
eine innere zweite Lamelle (227), die auf dem inneren zweiten Stegabschnitt gebildet ist, zu der zweiten vorbestimmten Richtung geneigt ist, und
eine innere Schulterstollenrille (216), die zwischen dem inneren Schulterstegabschnitt gebildet ist, und eine innere Schulterlamelle (217), die auf dem inneren Schulterstegabschnitt gebildet ist, zu der ersten vorbestimmten Richtung geneigt sind, wobei
die innere zweite Stollenrille und die innere Schulterstollenrille durch Versetzen in einer Reifenumfangsrichtung gebildet sind.

2. Reifen nach Anspruch 1, wobei
ein Ende der äußeren zweiten Stollenrille in der Reifenbreitenrichtung zu der äußeren zweiten umlaufenden Hauptrille geöffnet ist; und
ein anderes Ende der äußeren zweiten Stollenrille in der Reifenbreitenrichtung auf dem äußeren zweiten Stegabschnitt gebildet ist und mit einer Stollenrillen-Verbindungslamelle in Verbindung steht, die zu der zweiten vorbestimmten Richtung geneigt ist.

3. Reifen nach Anspruch 2, wobei sich die äußere zweite Lamelle, die am nächsten zu der äußeren zweiten Stollenrille gebildet ist, die mit der Stollenrillen-Verbindungslamelle in der Reifenumfangsrichtung in Verbindung steht, nur zu der äußeren ersten umlaufenden Hauptrille öffnet.

4. Reifen nach einem der Ansprüche 1 bis 3, wobei
der mittige Stegabschnitt die mittige Lamelle einschließt, von der ein Ende in entweder der äußeren zweiten umlaufenden Hauptrille, der inneren zweiten umlaufenden Hauptrille oder der mittigen Stollenrille geöffnet ist, und ein anderes Ende der mittigen Lamelle in dem mittigen Stegabschnitt beendet wird.

5. Reifen nach einem der Ansprüche 1 bis 4, wobei
der innere zweite Stegabschnitt die innere zweite Lamelle einschließt, von der ein Ende in entweder der inneren ersten umlaufenden Hauptrille, der inneren zweiten umlaufenden Hauptrille oder der inneren zweiten Stollenrille geöffnet ist, und ein anderes Ende der inneren zweiten Lamelle in dem inneren zweiten Stegabschnitt beendet wird.

6. Reifen nach einem der Ansprüche 1 bis 5, wobei ein Neigungswinkel eines Hauptrillenseitenabschnitts, der sich auf einer Seite der äußeren ersten umlaufenden Hauptrille der äußeren Schulterstollenrille und der äußeren Schulterlamelle in Bezug auf die Reifenbreitenrichtung befindet, größer ist als ein Neigungswinkel eines Schulterseitenabschnitts, der sich auf einer Seite der äußeren Schulter der äußeren Schulterstollenrille und der äußeren Schulterlamelle in Bezug auf die Reifenbreitenrichtung befindet.

7. Reifen nach einem der Ansprüche 1 bis 6, wobei ein Neigungswinkel eines Hauptrillenseitenabschnitts, der sich auf einer Seite der inneren ersten umlaufenden Hauptrille der inneren Schulterstollenrille und der inneren Schulterlamelle in Bezug auf die Reifenbreitenrichtung befindet, größer ist als ein Neigungswinkel eines Schulterseitenabschnitts, der sich auf einer Seite der inneren Schulter der inneren Schulterstollenrille und der inneren Schulterlamelle in Bezug auf die Reifenbreitenrichtung befindet.

8. Reifen nach einem der Ansprüche 1 bis 7, wobei eine Rillenbreite der inneren zweiten Stollenrille breiter ist als eine Rillenbreite der mittigen Stollenrille.

## Revendications

1. Pneumatique (10) comprenant une bande de roulement, dans lequel
une première rainure principale circonférentielle extérieure (31) située au plus près d'un épaulement extérieur (SHout) ;
une première rainure principale circonférentielle intérieure (41) située au plus près d'un épaulement intérieur (SHin) ;
une deuxième rainure principale circonférentielle extérieure (32) adjacente à la première rainure principale circonférentielle extérieure et située plus près de l'épaulement extérieur qu'une ligne équatoriale de pneumatique ; et
une deuxième rainure principale circonférentielle intérieure (42) adjacente à la première rainure principale circonférentielle intérieure et située plus près de l'épaulement intérieur que la ligne équatoriale de pneumatique ;
sont formées sur la bande de roulement, dans lequel
une pluralité de parties d'appui d'épaulement extérieur (110) sont fournies sur un côté de l'épaulement extérieur par rapport à la première rainure principale circonférentielle extérieure ;
une pluralité de deuxièmes parties d'appui extérieures (120) sont fournies entre la première rainure principale circonférentielle extérieure et la deuxième rainure principale circonférentielle extérieure ;
une pluralité de parties d'appui d'épaulement intérieur (210) sont fournies sur un côté de l'épaulement intérieur par rapport à la première rainure principale circonférentielle intérieure ;
une pluralité de deuxièmes parties d'appui intérieures (220) sont fournies entre la première rainure principale circonférentielle intérieure et la deuxième rainure principale circonférentielle intérieure ; et
une partie d'appui centrale (300) à travers la ligne équatoriale de pneumatique est fournie entre la deuxième rainure principale circonférentielle extérieure et la deuxième rainure principale circonférentielle intérieure ; dans lequel
la première rainure principale circonférentielle extérieure, la première rainure principale circonférentielle intérieure, la deuxième rainure principale circonférentielle extérieure et la deuxième rainure principale circonférentielle intérieure incluent une partie transparente (P) qui a une ligne de vue et chaque rainure a une largeur de rainure équivalente,
une rainure de barrette d'épaulement extérieur (31) formée entre les parties d'appui d'épaulement extérieur et une lamelle d'épaulement extérieur (41) formée sur la partie d'appui d'épaulement extérieur sont inclinées vers une première direction prédéterminée par rapport à une direction de la largeur du pneumatique, et
une deuxième rainure de barrette extérieure (126) formée entre les deuxièmes parties d'appui extérieures et une deuxième lamelle extérieure (127) formée sur la deuxième partie d'appui extérieure sont inclinées vers une deuxième direction prédéterminée opposée à la première direction prédéterminée par rapport à la direction de la largeur du pneumatique ;
une rainure de barrette centrale (316) formée entre les parties d'appui centrales est inclinée vers la deuxième direction prédéterminée,
une lamelle centrale (317) formée sur la partie d'appui centrale est inclinée dans la première direction prédéterminée,
une deuxième rainure de barrette intérieure (226) formée entre les deuxièmes parties d'appui intérieures est inclinée dans la première direction prédéterminée,
une deuxième lamelle intérieure (227) formée sur la deuxième partie d'appui intérieure est inclinée vers la deuxième direction prédéterminée, et
une rainure de barrette d'épaulement intérieur (216) formée entre la partie d'appui d'épaulement intérieur et une lamelle d'épaulement intérieur (217) formée sur la partie d'appui d'épaulement intérieur sont inclinées vers la première direction prédéterminée, dans lequel
la deuxième rainure de barrette intérieure et la rainure de barrette d'épaulement intérieur sont formées par décalage dans une direction circonférentielle du pneumatique.

2. Pneumatique selon la revendication 1, dans lequel
une extrémité de la deuxième rainure de barrette extérieure dans la direction de la largeur du pneumatique est ouverte vers la deuxième rainure principale circonférentielle extérieure ; et
une autre extrémité de la deuxième rainure de barrette extérieure dans la direction de la largeur du pneumatique est formée sur la deuxième partie d'appui extérieure et communique avec une lamelle de communication de rainure de barrette inclinée vers la deuxième direction prédéterminée.

3. Pneumatique selon la revendication 2, dans lequel la deuxième lamelle extérieure formée le plus près de la deuxième rainure de barrette extérieure communiquant avec la lamelle de communication de rainure de barrette dans la direction circonférentielle du pneumatique ne s'ouvre que vers la première rainure principale circonférentielle extérieure.

4. Pneumatique selon l'une quelconque des revendications 1 à 3, dans lequel
la partie d'appui centrale inclut la lamelle centrale, dont une extrémité est ouverte soit dans la deuxième rainure principale circonférentielle extérieure, soit dans la deuxième rainure principale circonférentielle intérieure ou soit dans la rainure de barrette centrale, et une autre extrémité de la lamelle centrale est terminée dans la partie d'appui centrale.

5. Pneumatique selon l'une quelconque des revendications 1 à 4, dans lequel
la deuxième partie d'appui intérieure inclut la deuxième lamelle intérieure, dont une extrémité est ouverte soit dans la première rainure principale circonférentielle intérieure, soit dans la deuxième rainure principale circonférentielle intérieure ou soit dans la deuxième rainure de barrette intérieure, et une autre extrémité de la deuxième lamelle intérieure est terminée dans la deuxième partie d'appui intérieure.

6. Pneumatique selon l'une quelconque des revendications 1 à 5, dans lequel un angle d'inclinaison d'une partie latérale de rainure principale située sur un côté de la première rainure principale circonférentielle extérieure de la rainure de barrette d'épaulement extérieur et de la lamelle d'épaulement extérieur par rapport à la direction de la largeur du pneumatique est plus grand qu'un angle d'inclinaison d'une partie latérale d'épaulement située sur un côté de l'épaulement extérieur de la rainure de barrette d'épaulement extérieur et de la lamelle d'épaulement extérieur par rapport à la direction de la largeur du pneumatique.

7. Pneumatique selon l'une quelconque des revendications 1 à 6, dans lequel un angle d'inclinaison d'une partie latérale de rainure principale située sur un côté de la première rainure principale circonférentielle intérieure de la rainure de barrette d'épaulement intérieur et de la lamelle d'épaulement intérieur par rapport à la direction de la largeur du pneumatique est plus grand qu'un angle d'inclinaison d'une partie latérale d'épaulement située sur un côté de l'épaulement intérieur de la rainure de barrette d'épaulement intérieur et de la lamelle d'épaulement intérieur par rapport à la direction de la largeur du pneumatique.

8. Pneumatique selon l'une quelconque des revendications 1 à 7, dans lequel une largeur de rainure de la deuxième rainure de barrette intérieure est plus large qu'une largeur de rainure de la rainure de barrette centrale.
